# EUROPÄISCHE PATENTSCHRIFT

(11) **EP 2 754 870 B1**
(45) Veröffentlichungstag und Bekanntmachung des Hinweises auf die Patenterteilung: **07.03.2018**
(21) Anmeldenummer: 13000147.2
(22) Anmeldetag: 11.01.2013
(51) Int. Cl.: F01N 3/08, F01N 3/20, F01N 13/14, E02F 9/08, E02F 9/20

(54) **Straßenfertiger mit Wärmemanagementsystem**
Road finisher with heat management system
Finisseur de route avec système de gestion de la chaleur

(43) Veröffentlichungstag der Anmeldung: 16.07.2014
(73) Patentinhaber: Joseph Vögele AG, 67067 Ludwigshafen (DE)
(72) Erfinder: Herzberg, Ingo, 74918 Angelbachtal (DE)
(74) Vertreter: Grünecker Patent- und Rechtsanwälte PartG mbB

(56) Entgegenhaltungen:
- EP-A1- 1 582 732
- EP-A1- 1 662 103
- EP-A1- 2 149 685
- EP-A2- 2 103 788
- DE-A1-102010 029 269
- US-A1- 2010 038 162

## Beschreibung

Die Erfindung bezieht sich auf einen Straßenfertiger oder Beschicker gemäß dem Oberbegriff des Anspruchs 1.

Solche Baumaschinen sind aus der Praxis bekannt. Sie verfügen in der Regel über einen Primärantrieb, der Abgase ausstößt. Durch strenger werdende Emissionsschutzrichtlinien und - gesetzte werden zunehmend Nachbehandlungsmaßnahmen erforderlich, die schädliche bzw. unerwünschte Bestandteile der Abgase reduzieren. Eine mögliche Maßnahme ist das Einspritzen von Zusatzstoffen in den Abgasstrom. Durch verschiedene chemische Reaktionen werden die unerwünschten Bestandteile der Abgase in weniger schädliche Stoffe umgewandelt. Ein Beispiel hierfür ist die Einspritzung von Harnstofflösungen in die Abgase von Dieselmotoren um den Ausstoß verschiedener Stickoxide zu reduzieren. US 2010 038126 A1 offenbart eine Baumaschine mit einem solchen Abgasreinigungssystem.

Aus EP 1 582 732 A1 ist eine Entnahmeeinheit für mit Harnstofflösung gefüllte Tanks bekannt. Diese Entnahmeeinheit umfasst eine Heizeinrichtung, die auch zur Kühlung einsetzbar ist. So soll eine Zersetzung und ein Einfrieren der Harnstofflösung verhindert werden. Nachteilig an dieser Lösung ist, dass die Wärmeabfuhrleistung der Entnahmeeinheit in heißen Gebieten äußerst hoch sein muss, da dort der Wärmeeintrag in den Tank dort besonders hoch ist.

Aus EP 2 149 685 A ist eine Baumaschine mit einem Reduktionsmittelbehälter bekannt. Ein Temperaturdetektor erfasst die Temperatur des Reduktionsmittels in dem Reduktionsmittelbehälter und ein Klimagerät lüftet eine Fahrerkabine. Aufgabe der Erfindung ist es, den Einsatzbereich von Baumaschinen mit Abgasnachbehandlungssystemen zu erweitern.

Diese Aufgabe wird erfindungsgemäß gelöst durch eine Baumaschine mit den Merkmalen des Anspruchs 1. Vorteilhafte Weiterbildungen sind in den Unteransprüchen gegeben.

Die erfindungsgemäße Baumaschine zeichnet sich durch ein Wärmemanagementsystem aus, das dazu eingerichtet ist, die Temperatur eines Zusatzstoffes in einem Tank derart zu beeinflussen, dass sie nicht über eine Zersetzungstemperatur des Zusatzstoffes steigt. Je nach Einsatzort der Baumaschine können dabei aktive oder auch passive Systeme zum Einsatz kommen.

Besonders günstig ist es, wenn das Wärmemanagementsystem dazu eingerichtet ist, die Temperatur des Zusatzstoffes im Tank derart zu beeinflussen, dass sie nicht über 50°C steigt. Dies ist insbesondere bei der weit verbreiteten Verwendung von Harnstofflösungen relevant, da sich solche Lösungen in diesen Temperaturregionen zersetzten und so unbrauchbar werden. Zweckmäßig ist es, wenn der Tank, in dem sich der Zusatzstoff befindet, von einem Isoliergehäuse umschlossen ist. Dies stellt eine kostengünstige und einfache Lösung für weniger heiße Regionen dar. Der Tank kann so insbesondere vor Strahlungswärme geschützt werden, oder aber bei nur kurzzeitigem Überschreiten der zulässigen Temperatur in der Umgebung des Tanks. Das Isoliergehäuse umfasst Kanäle, die von einem Medium durchströmbar sind. Auf diese Weise kann Wärme aktiv mittels Konvektion abgeführt werden. Bei dem Medium handelt es sich um Umgebungsluft. Es ist denkbar, in dem Isoliergehäuse einen Wärmeübertrager anzuordnen, der zusammen mit einem Kompressor dazu konfiguriert ist, dem Tank und/oder dessen Inhalt Wärmeenergie zuzuführen und/oder zu entziehen. Eine solche Lösung ist besonders dann vorteilhaft, wenn z. B. die Umgebungsluft eine sehr hohe Temperatur hat.

In einer weiteren Variante kann das Wärmemanagementsystem Regelleitungen umfassen, die mit einer in dem Tank angeordneten Entnahmeeinheit verbunden und dazu eingereichtet sind, die Entnahmeeinheit mit einem Wärmemedium zu versorgen, wobei die Entnahmeeinheit dazu eingerichtet ist, dem Inhalt des Tanks unter Einsatz des Wärmemediums wahlweise Wärmeenergie zu entziehen und/oder zuzuführen. Auf diese Weise kann die Temperatur des Zusatzstoffs im Tank direkt reguliert werden. Eventuelle Leitungsverluste durch die Wandung des Tanks werden so vermieden. Da die Regelleitungen mit der Entnahmeeinheit verbunden sind, kann zusätzlich eine Öffnung in einem gegebenenfalls verwendeten Isoliergehäuse eingespart werden, da die Regelleitungen durch dieselbe Öffnung des Isoliergehäuses austreten können wie mit der Entnahmeeinheit verbundene Anschlussleitungen zur Beförderung des Zusatzstoffes.

Zweckmäßig ist es, wenn das Wärmemedium ein Kühlmedium einer Kühlanlage eines Primärantriebs der Baumaschine ist. So wird lediglich ein ohnehin notwendiger Kühlkreis erweitert, anstatt einen zusätzlichen vorzusehen. So wird der Aufwand, der für das Wärmemanagementsystem erforderlich ist, reduziert.

In einer weiteren Variante kann die Regelleitung mit einer warmen und/oder einer kalten Seite einer Kältemaschine verbunden sein. Auf diese Weise kann das Wärmemanagementsystem auch hohen Kühlleistungsanforderungen in besonders warmen Regionen gerecht werden.

Denkbar ist es, dass das Wärmemanagementsystem des Weiteren eine Regeleinrichtung umfasst, die dazu eingerichtet ist, die Regelleitung wahlweise mit der warmen oder der kalten Seite der Kältemaschine zu verbinden. Diese Variante eignet sich besonders für Einsatzorte mit großen Temperaturunterschieden. Dort kann es vorteilhaft sein, dass der Zusatzstoff im Tank nur zeitweise gekühlt, zu anderen Zeiten jedoch erwärmt wird. Insbesondere aber bei Baumaschinen, die an verschiedenen Orten, die hohe Temperaturunterschiede aufweisen, eingesetzt werden, ist eine solche Lösung von Vorteil.

Besonders günstig ist es, wenn die Kältemaschine zur Kälteerzeugung die Wärmeenergie eines Kühlmediums eines Primärantriebs der Baumaschine nutzt. Dadurch wird ein besonders energieeffizienter Betrieb der Baumaschine ermöglicht.

Denkbar ist dabei, dass die Kältemaschine eine Adsorptionskältemaschine ist.

In einer Variante, in der als Anschlussleitung mindestens eine Rücklaufleitung vorgesehen ist, wobei die Rücklaufleitung Zusatzstoffe zu dem Tank hinleitet, ist es vorteilhaft, wenn im Bereich der Rücklaufleitung eine Kühlvorrichtung angeordnet und dazu konfiguriert ist, dem durch die Rücklaufleitung geleiteten Zusatzstoff Wärmeenergie zu entziehen. Dadurch wird der Wärmeeintrag in den Tank durch rücklaufenden, unter Umständen erwärmten Zusatzstoff reduziert. Auch wenn der durch die Rücklaufleitung fließende Zusatzstoff nicht wärmer ist als der im Tank befindliche Zusatzstoff, kann es zweckmäßig sein, den zurückfließenden Zusatzstoff zu kühlen. Auf diese Art wird der Inhalt des Tanks zusätzlich gekühlt.

Die Kühlvorrichtung kann dabei z. B. ein Peltierelement sein.

In einer weiteren Variante kann die Kühlvorrichtung ein zweiter Wärmeübertrager sein, der im Bereich einer Kühlanlage eines Primärantriebs der Baumaschine angeordnet ist. Durch die Nutzung vorhandener Maschinenkomponenten kann auch hier der für das Wärmemanagementsystem erforderliche Aufwand reduziert werden.

Die Erfindung bezieht sich auf einen Straßenfertiger oder einen Beschicker, der vorstehend beschriebenen Art, mit den Merkmalen des Anspruchs 1. Im Folgenden werden vorteilhafte Ausführungsbeispiele der Erfindung anhand von Zeichnungen näher erläutert.
Fig. 1 zeigt einen Straßenfertiger.
Fig. 2 zeigt einen Primärantrieb der Baumaschine aus Figur 1, eine Kühlanlage zur Kühlung dieses Primärantriebs, einen Abgastrakt zur Abführung der Abgase des Primärantriebs, einen Tank zur Aufnahme eines Zusatzstoffes zur Nachbehandlung von Abgasen, sowie ein Wärmemanagementsystem.
Fig. 3 zeigt eine Draufsicht eines Zusatzstofftanks, der von einem Isoliergehäuse umschlossen ist.
Fig. 4 zeigt eine seitliche Schnittansicht des Tanks aus Figur 3.
Fig. 5 zeigt die gleichen Komponenten wie Figur 2. Zusätzlich ist ein Isoliergehäuse für den Zusatzstofftank dargestellt.
Fig. 6 zeigt die Komponenten aus Figur 5 mit einem Wärmemanagementsystem nach einem weiteren Ausführungsbeispiel der Erfindung.
Fig. 7 zeigt die Komponenten aus Figur 5 mit einem Wärmemanagementsystem nach einem weiteren Ausführungsbeispiel der Erfindung.
Fig. 8 zeigt die Komponenten aus Figur 5 mit einem Wärmemanagementsystem nach einem weiteren Ausführungsbeispiel der Erfindung.
Fig. 9 zeigt die Komponenten aus Figur 5 mit einem Wärmemanagementsystem nach einem weiteren Ausführungsbeispiel der Erfindung.
Fig. 10 zeigt die Komponenten aus Fig. 5 mit einem Wärmemanagementsystem nach einem weiteren Ausführungsbeispiel der Erfindung.

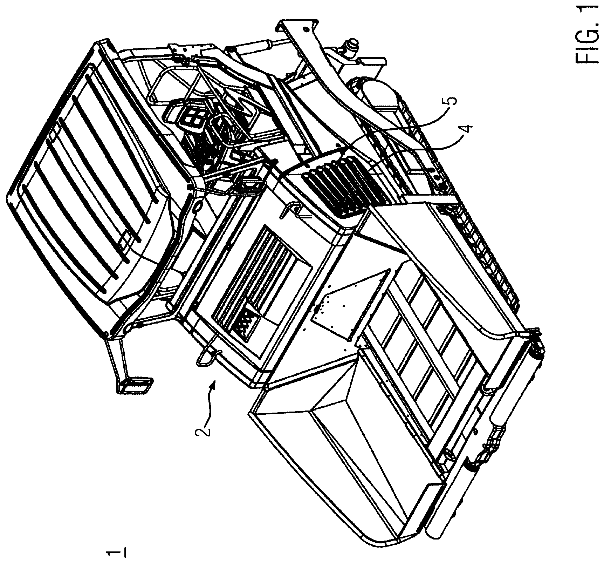

In Figur 1 ist eine perspektivische Ansicht eines erfindungsgemäßen Straßenfertigers dargestellt. An der Baumaschine 1 ist ein Maschinenraum 2 vorgesehen, in dem sowohl ein Primärantrieb 3, als auch weitere Komponenten und Zusatzaggregate der Baumaschine 1 angeordnet sind. Im gezeigten Ausführungsbeispiel befinden sich hinter einer Abdeckung 4 des Motorraums, in der Kühlschlitze 5 vorgesehen sind, eine Kühlmedium 33 führende Kühlanlage 6 des Primärantriebs 3 der Baumaschine 1.

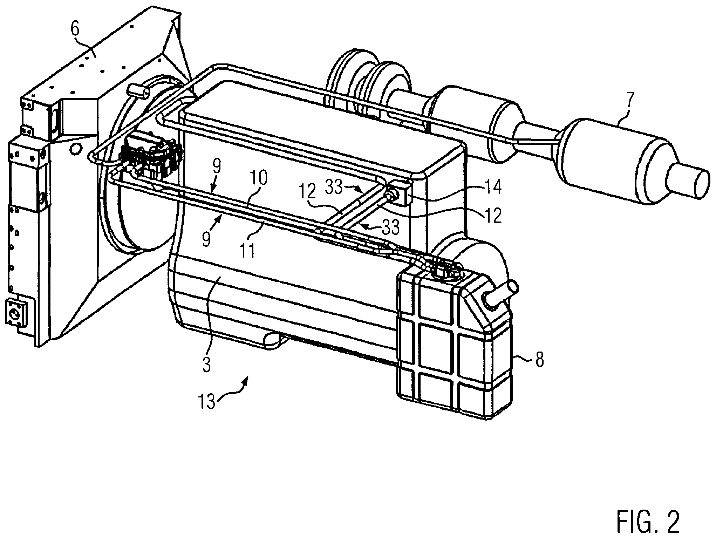

In Figur 2 sind der Primärantrieb 3 und die Kühlanlage 6 dargestellt. Außerdem ist ein Abgastrakt 7 dargestellt, der zur Abführung von Abgasen des Primärantriebs 3 eingerichtet sein kann. Es ist jedoch ebenso denkbar, dass von dem Abgastrakt 7 Abgase von weiteren Komponenten der Baumaschine 1 abgeführt werden. Des Weiteren ist ein Tank 8 dargestellt, der zur Aufnahme eines Zusatzstoffes 9 konfiguriert ist. Dazu ist er durch mindestens eine Anschlussleitung 10 mit dem Abgastrakt 7 verbunden. Im dargestellten Ausführungsbeispiel ist als weitere Anschlussleitung 10 eine Rücklaufleitung 11 vorgesehen, die nicht benötigten Zusatzstoff 9 zurück in den Tank 8 leitet. Der Tank 8 ist darüber hinaus mittels Regelleitungen 12 an einen Kühlkreislauf des Primärantriebs 3 angeschlossen, sodass heißes Kühlmedium 33 in den Bereich des Tanks 8 befördert werden kann. Dies kann vorteilhaft sein, um den Zusatzstoff 9 auf seine Betriebstemperatur zu erwärmen. Die Regelleitungen 12 müssen nicht zwingend mit dem Kühlkreislauf des Primärantriebs 3 verbunden sein. Sie können mit einer beliebigen Vorrichtung der Baumaschine 1 verbunden sein, die dazu geeignet ist, die Regelleitungen 12 mit einem Wärmemedium 17 zu versorgen, das zur Regulierung der Temperatur des Zusatzstoffes 9 einsetzbar ist.

Zusätzlich ist ein erstes Ausführungsbeispiel eines Wärmemanagementsystems 13 dargestellt, das in diesem Ausführungsbeispiel die Regelleitungen 12 und ein Absperrventil 14 umfasst, das die Zufuhr von heißem Kühlmedium 33 unterbricht, sobald die Temperatur des Zusatzstoffes 9 eine bestimmte voreingestellte Temperatur überschreitet. Diese Temperatur kann eine Zersetzungstemperatur des Zusatzstoffes sein. Vorteilhafter ist es jedoch, wenn die voreingestellte Temperatur niedriger ist als die Zersetzungstemperatur des Zusatzstoffes 9, beispielsweise 1-20°C unter der Zersetzungstemperatur, bevorzugt 1-10°C unter der Zersetzungstemperatur des Zusatzstoffes 9, besonders bevorzugt 1-5°C unter der Zersetzungstemperatur des Zusatzstoffes 9. Die angegebenen Temperaturbereiche sind auf alle beschriebenen Ausführungsbeispiele anwendbar, und ebenso auf Ausführungsformen, die die verschiedenen Merkmale der beschriebenen Ausführungsbeispiele in beliebiger Weise miteinander kombinieren.

Als Zusatzstoff kann beispielsweise eine Harnstofflösung verwendet werden. Diese eignet sich besonders, um den Ausstoß ungewünschter Stickoxide zu reduzieren. In diesem Fall ist das Wärmemanagementsystem 13 dazu ausgelegt, die Temperatur des Zusatzstoffes 9 zu jeder Zeit niedriger als 50°C zu halten, vorzugsweise niedriger als 45°C.

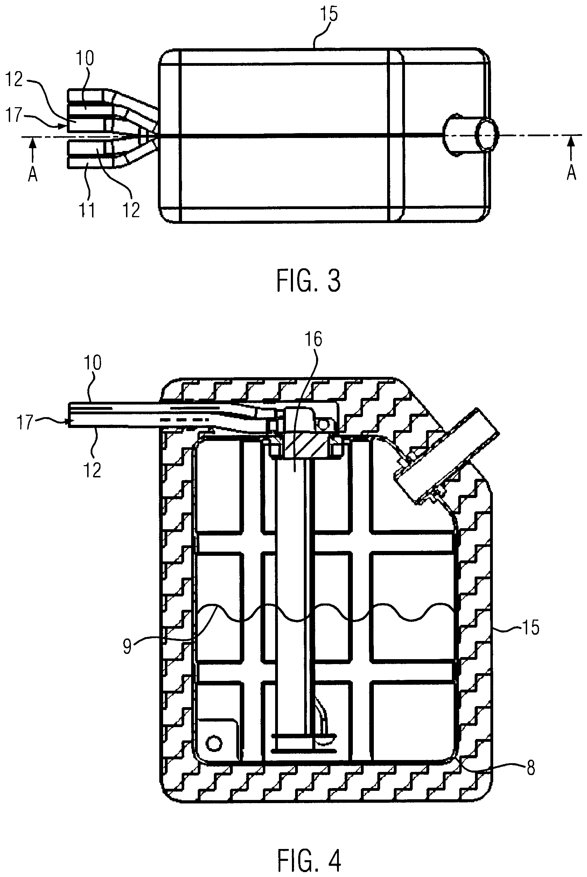

Figur 3 zeigt den Tank 8 nach der Erfindung. Darin ist der Tank 8 von einem Isoliergehäuse 15 umschlossen. Das Isoliergehäuse 15 kann als Teil des Wärmemanagementsystems 13 einen Beitrag dazu leisten, dass die Temperatur des Zusatzstoffes 9 in dem gewünschten Bereich gehalten wird. Es kann insbesondere vor Strahlungswärme schützen, die z. B. von dem Primärantrieb 3 der Baumaschine 1 abgestrahlt wird. In dieser und den folgenden Darstellungen ist das Isoliergehäuse 15 als zwei Halbschalen umfassend und aus Vollmaterial gefertigt gezeigt. Es ist jedoch ebenso möglich, Hohlkörper, Doppelwände oder aber andere Strukturen in oder an dem Isoliergehäuse 15 vorzusehen, die dafür geeignet sind, seinen Inhalt von Wärmequellen aus der Umgebung zu isolieren. Außerdem ist es möglich, das Isoliergehäuse 15 so auszulegen, dass es mehr oder weniger als zwei Elemente umfasst.

Figur 4 zeigt eine Schnittansicht des Tanks 8 und des ihn umschließenden Isoliergehäuses 15. In dem Tank 8 ist eine Entnahmeeinheit 16 angeordnet. Sie ist dazu eingerichtet, den Zusatzstoff 9 aus dem Tank 8 zu den Anschlussleitungen 10 zu befördern und/oder den Zusatzstoff 9 aus der Rücklaufleitung 11 in den Tank 8 zu befördern. Im gezeigten Ausführungsbeispiel ist die Entnahmeeinheit 16 darüber hinaus mit den Regelleitungen 12 verbunden. In diesem Fall kann sie so eingerichtet sein, dass ein durch die Regelleitungen 12 zirkulierendes Wärmemedium 17 so durch die Entnahmeeinheit 16 geleitet wird, dass es Wärme von dem Zusatzstoff 9 in dem Tank 8 aufnimmt oder aber an diesen abgibt. Je nach Temperatur des Wärmemediums 17 ist es somit möglich, den Zusatzstoff 9 zu erwärmen, wenn die Baumaschine 1 in einer kalten Umgebung eingesetzt wird, und/oder den Zusatzstoff 9 zu kühlen, wenn die Baumaschine 1 in einer heißen Region eingesetzt wird.

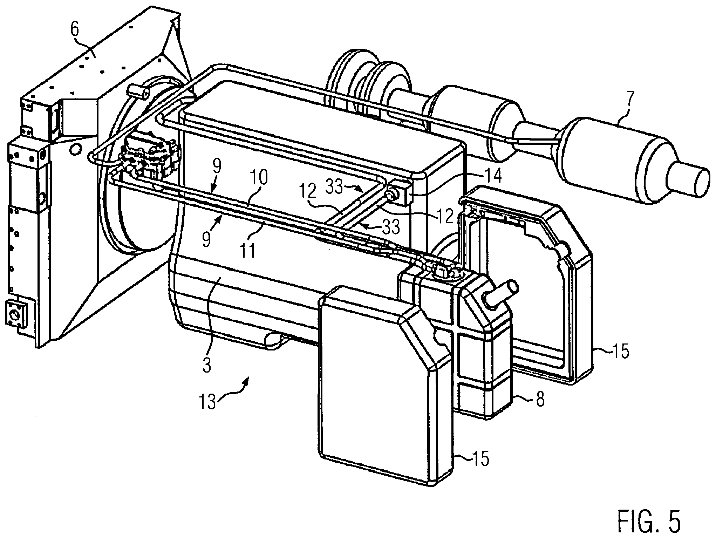

In Figur 5 sind verschiedene Komponenten der Baumaschine 1 gemäß einem weiteren Ausführungsbeispiel der Erfindung dargestellt. Gezeigt sind der Primärantrieb 3, dessen Kühlanlage 6, der Abgastrakt 7 sowie der Tank 8 zur Aufnahme des Zusatzstoffs 9. Der Tank 8 wird von den beiden Hälften des Isoliergehäuses 15 umschlossen und so vor durch den Primärabtrieb 3 abgestrahlter Wärme geschützt. Im gezeigten Ausführungsbeispiel führen die Regelleitungen 12 als Wärmemedium 17 ausschließlich das Kühlmedium 33 aus dem Kühlkreislauf des Primärantriebs 3. Da dieses in der Regel eher warm ist, ist in der gezeigten Konfiguration keine aktive Kühlung durch die Entnahmeeinheit 16 möglich. Wie bereits erwähnt, kann jedoch mit Hilfe des Absperrventils 14 die Zufuhr von Wärmemedium 17 zur Entnahmeeinheit 16 unterbrochen werden, wodurch der Wärmeeintrag in den Tank 8 gestoppt wird. Wie in später beschriebenen Ausführungsbeispielen erklärt, kann mit Hilfe der Regelleitungen 12 und der Entnahmeeinheit 16 jedoch auch eine aktive Kühlung des Inhalts des Tanks 8 realisiert werden.

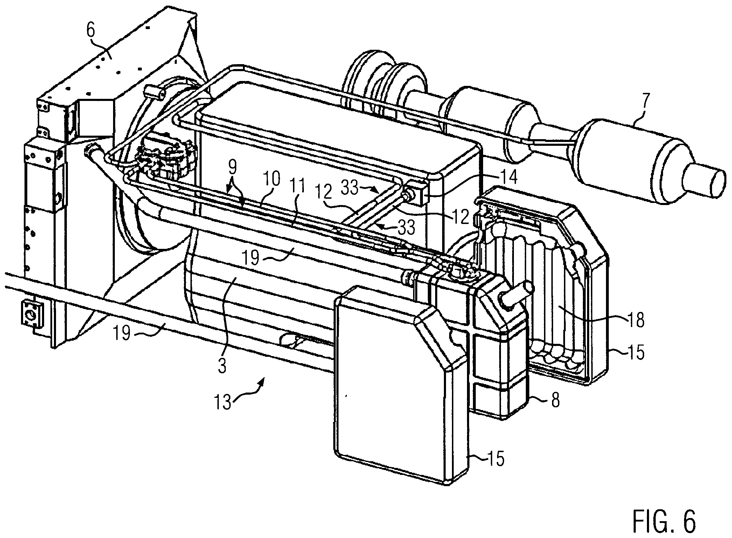

In Figur 6 sind Komponenten der Baumaschine 1 gemäß der Erfindung dargestellt. Im Unterschied zum vorangehend beschriebenen zweiten Ausführungsbeispiel sind im Gehäuse 15 Kanäle 18 vorgesehen, die von einem Medium durchströmbar sind. So kann die Wärmeabfuhr aus dem Isoliergehäuse 15 heraus und von dem Tank 8 fort erhöht werden. Als Medium wird Umgebungsluft eingesetzt, die von Belüftungsleitungen 19 zu dem Isoliergehäuse 15 hin- bzw. von diesem fortgeleitet wird. Im Ausführungsbeispiel wird der dazu nötige Druckunterschied von der Kühlanlage 6 erzeugt. Er kann jedoch unter Einsatz von beliebigen Mitteln, wie z. B. Ventilatoren oder Pumpen, bereitgestellt werden.

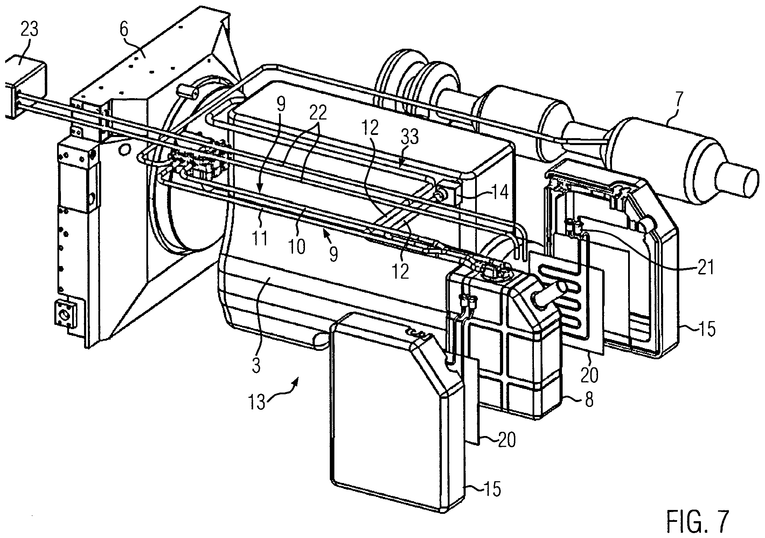

In Figur 7 sind Komponenten der Baumaschine 1 gemäß einem weiteren Ausführungsbeispiel der Erfindung dargestellt. In diesem Ausführungsbeispiel umfasst das Wärmemanagementsystem 13 Wärmeübertrager 20, die im Bereich des Tanks 8 angeordnet sind. Im gezeigten Ausführungsbeispiel sind die Wärmeübertrager 20 innerhalb des Isoliergehäuses 15 positioniert. Sollte kein Isoliergehäuse 15 vorgesehen sein, können dennoch Wärmeübertrager 20 im Bereich des Tanks 8 vorgesehen sein. Die Wärmeübertrager 20 sind durch Kompressoranschlüsse 21 und Kompressorleitungen 22 mit einer Kompressoreineheit 23 verbunden. Dadurch kann dem Tank 8 auf bekannte Art und Weise unter Einsatz der Wärmeübertrager 20 Wärmeenergie zugeführt, bzw. entzogen werden. Es ist darüber hinaus möglich, die Kompressoreinheit 23 so zu konfigurieren, dass wahlweise zwischen einem Modus, in welchem dem Tank 8 Wärme zugeführt wird, und einem anderen Modus, in welchem dem Tank 8 Wärmeenergie entzogen wird, gewählt werden kann. Dies bietet insbesondere dann Vorteile, wenn die beschriebene Baumaschine 1 unter verschiedenen klimatischen Bedingungen einsatzbereit sein soll. Alternativ zu den im Ausführungsbeispiel gezeigten zwei Wärmeübertragern 20 kann ebenso lediglich einer oder aber eine beliebige Anzahl Wärmeübertrager 20 vorgesehen sein.

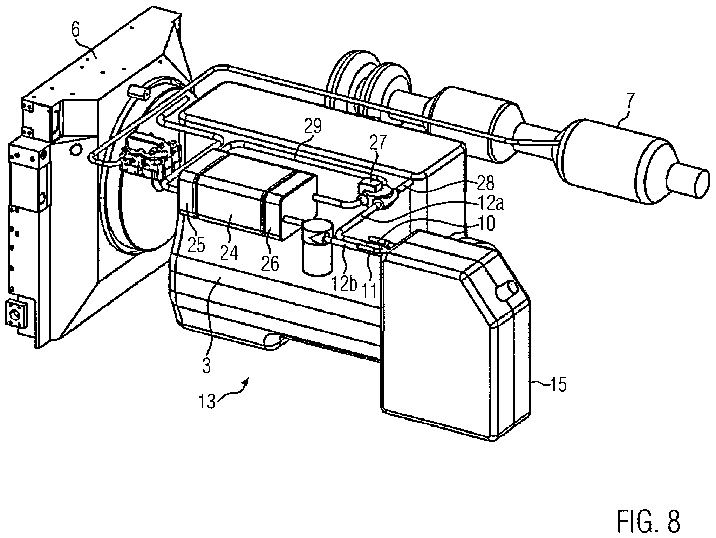

Figur 8 zeigt verschiedene Komponenten der Baumaschine 1 gemäß einem weiteren Ausführungsbeispiel der Erfindung. Die Anschlussleitung 10 und die Rücklaufleitung 11 sind zur besseren Übersichtlichkeit nur im Ansatz dargestellt. In diesem Ausführungsbeispiel umfasst das Wärmemanagementsystem 13 eine Kältemaschine 24. Diese umfasst eine warme Seite 25 und eine kalte Seite 26. Das Wärmemanagementsystem 13 umfasst des Weiteren eine Regeleinrichtung 27, die mindestens zwei Betriebsarten ermöglicht. In einer ersten Betriebsart stellt die Regeleinrichtung 27 die Verbindung zwischen der Regelleitung 12a und einer Kühlmediumleitung 28 her, sodass warmes Kühlmedium 33 aus dem Primärantrieb 3 zur Entnahmeeinheit 16 gefördert wird. Diese gibt die Wärme des Wärmemediums 17, in diesem Fall das Kühlmedium 33 des Primärantriebs 3, an den Zusatzstoff 9 im Inneren des Tanks 8 ab. Das Wärmemedium 17 wird dann über die Regelleitung 12b und die kalte Seite 26 der Kältemaschine 24 wieder zur Regeleinheit 27 geleitet, die in der beschriebenen ersten Betriebsart die Verbindung zu einer Leitung 29 herstellt, welche das Wärmemedium 17 zur warmen Seite 25 der Kältemaschine 24 leitet, von wo aus es schließlich wieder in den Kühlkreislauf des Primärantriebs 3 zurückgeleitet wird.

In einer zweiten Betriebsart stellt die Regeleinrichtung 27 eine Verbindung zwischen der Kühlmediumleitung 28 und der Leitung 29 her. Dadurch wird warmes Kühlmedium 33 des Primärantriebs 3 zur warmen Seite 25 der Kältemaschine 24 geleitet. Dadurch kann die Kältemaschine 24 auf ihrer kalten Seite 26 kühlend auf das dort durchgeleitete Wärmemedium 17 wirken. Dieses wird von der kalten Seite 26 zur Regeleinrichtung 27 geleitet. Diese stellt eine Verbindung zur Regelleitung 12a her, die das gekühlte Wärmemedium 17 zur Entnahmeeinheit 16 leitet, wo es dem Zusatzstoff 9 im Tank 8 Wärmeenergie entziehen kann, und dann über die Leitung 12b zurück zur kalten Seite 26 der Kältemaschine 24 fließen kann. Da hier die Wärmeenergie des Kühlmediums 33 des Primärantriebs 3 genutzt wird, um das Wärmemedium 17 zu kühlen, stellt dies eine besonders effiziente Art der Kühlung für den Zusatzstoff 9 dar.

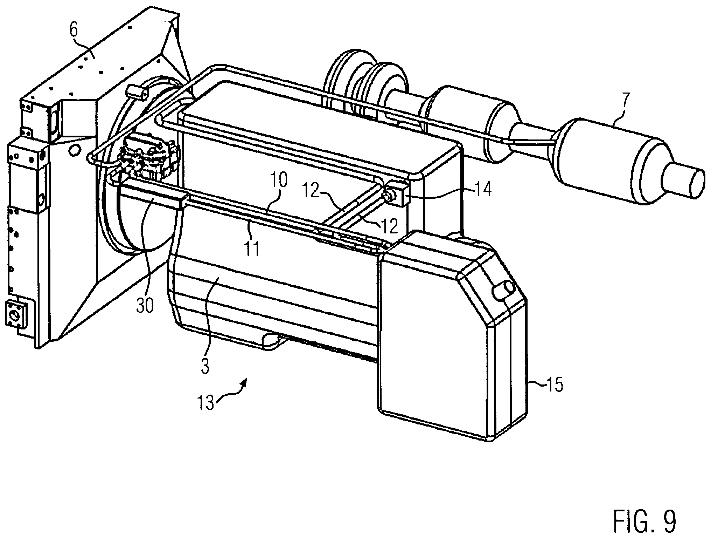

In Figur 9 sind Komponenten der Baumaschine 1 gemäß einem weiteren Ausführungsbeispiel der Erfindung dargestellt. Das Wärmemanagementsystem 13 umfasst in diesem Ausführungsbeispiel ein Peltierelement 30, das im Bereich der Rücklaufleitung 11 angeordnet ist, um Zusatzstoff 9, der zurück zum Tank 8 geleitet wird, und eventuell wärmer ist als der im Tank 8 befindliche Zusatzstoff 9, zu kühlen. Auf diese Weise wird unnötiger Wärmeeintrag in den Tank 8 vermieden. Auch wenn der durch die Rücklaufleitung 11 fließende Zusatzstoff 9 nicht wärmer ist als der im Tank 8 befindliche Zusatzstoff 9, kann es zweckmäßig sein, den zurück fließenden Zusatzstoff 9 zu kühlen. Auf diese Art wird der Inhalt des Tanks 8 zusätzlich gekühlt.

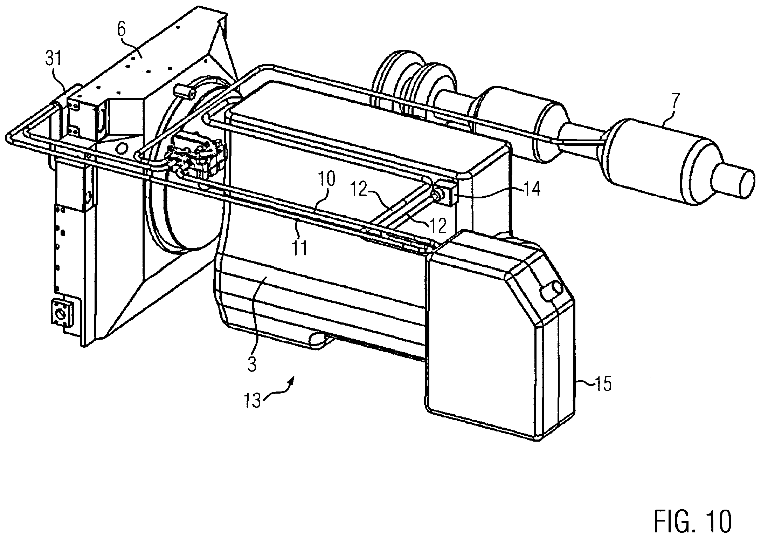

In Figur 10 ist ein ähnliches Konzept zu sehen. Hier ist anstatt eines Peltierelements jedoch ein zweiter Wärmeübertrager 31 vorgesehen, der den Zusatzstoff in der Rücklaufleitung 11 kühlt. Dieser zweite Wärmeübertrager 31 kann im Bereich der Kühlanlage 6 des Primärantriebs 3 angeordnet sein, oder aber an jeder anderen beliebigen geeigneten Stelle an oder in der Baumaschine 1. Es ist jedoch ebenso gut möglich, dass anstatt des Peltierelements 30 oder des Wärmeübertragers 31 eine oder mehrere beliebige geeignete Kühlvorrichtungen 32 im Bereich der Rücklaufleitung vorgesehen sind.

Die Merkmale der vorgestellten Ausführungsbeispiele können in beliebiger Art und Weise kombiniert werden. Dabei ist auch die isolierte Behandlung einzelner Merkmale möglich. Die verschiedenen beschriebenen Komponenten können insbesondere konstruktiv so ausgelegt sein, dass sie sich modulartig miteinander kombinieren lassen. Dadurch kann die Varianten- und Teilvielfalt bei der Produktion von erfindungsgemäßen Baumaschinen 1 reduziert werden. So könnten z. B. bei Baumaschinen 1, die für den Einsatz in extrem heißen Gebieten bestellt wurden, sämtliche beschriebenen Maßnahmen verbaut werden, während bei Baumaschinen 1 für weniger heiße Gebiete nur einige ausgewählte Komponenten eingebaut werden könnten.

## Patentansprüche

1. Straßenfertiger oder Beschicker (1) mit:
einem Tank (8) zur Aufnahme eines Zusatzstoffes (9) zur Nachbehandlung von Abgasen der Baumaschine (1), wobei der Zusatzstoff (9) eine Zersetzungstemperatur aufweist,
mindestens einer Anschlussleitung (10), die dazu konfiguriert ist, den Zusatzstoff (9) von dem Tank (8) fort und/oder zu diesem hin zu leiten, und
einer Entnahmeeinheit (16), die mit der mindestens einen Anschlussleitung (10) verbunden und dazu eingerichtet ist, den Zusatzstoff (9) aus dem Tank (8) zu der mindestens einen Anschlussleitung (10) und/oder von der Anschlussleitung (10) in den Tank (8) zu befördern, wobei, der Straßenfertiger oder Beschicker (1) des Weiteren ein Wärmemanagementsystem (13) umfasst, das dazu eingerichtet ist, die Temperatur des Zusatzstoffes (9) im Tank (8) derart zu beeinflussen, dass sie nicht über die Zersetzungstemperatur des Zusatzstoffes (9) steigt, wobei der Tank (8) von einem Isoliergehäuse (15) umschlossen ist, das Kanäle (18) umfasst, die von Umgebungsluft durchströmbar sind.

2. Straßenfertiger oder Beschicker nach Anspruch 1, **dadurch gekennzeichnet, dass** das Wärmemanagementsystem (13) dazu eingerichtet ist, die Temperatur des Zusatzstoffes (9) im Tank (8) derart zu beeinflussen, dass sie nicht über 50 °C steigt.

3. Straßenfertiger oder Beschicker nach einem der Anspruch 1 oder 2, **dadurch gekennzeichnet, dass** das Isoliergehäuse (15) mindestens einen ersten Wärmeübertrager (20) umfasst, der zusammen mit einem Kompressor (23) dazu konfiguriert ist, dem Tank (8) und/oder dessen Inhalt Wärmeenergie zuzuführen und/oder zu entziehen.

4. Straßenfertiger oder Beschicker nach einem der vorangehenden Ansprüche, **dadurch gekennzeichnet, dass** das Wärmemanagementsystem (13) Regelleitungen (12) umfasst, die mit der Entnahmeeinheit (16) verbunden und dazu eingerichtet sind, die Entnahmeeinheit (16) mit einem Wärmemedium (17) zu versorgen, wobei die Entnahmeeinheit (16) dazu eingerichtet ist, dem Inhalt des Tanks (8) unter Einsatz des Wärmemediums (17) wahlweise Wärmeenergie zu entziehen und/oder zuzuführen.

5. Straßenfertiger oder Beschicker nach Anspruch 4, **dadurch gekennzeichnet, dass** das Wärmemedium (17) ein Kühlmedium (33) einer Kühlanlage (6) eines Primärantriebs (3) des Straßenfertigers oder Beschickers (1) ist.

6. Straßenfertiger oder Beschicker nach Anspruch 4 oder 5, **dadurch gekennzeichnet, dass** die Regelleitungen (12) mit einer warmen und/oder einer kalten Seite (25, 26) einer Kältemaschine (24) verbunden sind.

7. Straßenfertiger oder Beschicker nach Anspruch 6, **dadurch gekennzeichnet, dass** das Wärmemanagementsystem (13) des Weiteren eine Regeleinrichtung (27) umfasst, die dazu eingerichtet ist, die Regelleitungen (12) wahlweise mit der warmen oder der kalten Seite (25, 26) der Kältemaschine (24) zu verbinden.

8. Straßenfertiger oder Beschicker nach Anspruch 6 oder 7, **dadurch gekennzeichnet, dass** die Kältemaschine (24) die Wärmeenergie eines Kühlmediums (33) eines Primärantriebs (3) des Straßenfertigers oder Beschickers (1) nutzt.

9. Straßenfertiger oder Beschicker nach einem der Ansprüche 6 bis 8, **dadurch gekennzeichnet, dass** die Kältemaschine (24) eine Adsorptionskältemaschine ist.

10. Straßenfertiger oder Beschicker nach einem der vorangehenden Ansprüche, **dadurch gekennzeichnet, dass** als Anschlussleitung (10) mindestens eine Rücklaufleitung (11) vorgesehen ist, wobei die Rücklaufleitung (11) Zusatzstoff (9) zu dem Tank (8) hin leitet, und im Bereich der Rücklaufleitung (11) eine Kühlvorrichtung (32) angeordnet und dazu konfiguriert ist, dem durch die Rücklaufleitung (11) geleiteten Zusatzstoff (9) Wärmeenergie zu entziehen.

11. Straßenfertiger oder Beschicker nach Anspruch 10, **dadurch gekennzeichnet, dass** die Kühlvorrichtung (32) ein Peltierelement (30) ist.

12. Straßenfertiger oder Beschicker nach Anspruch 10, **dadurch gekennzeichnet, dass** die Kühlvorrichtung (32) ein zweiter Wärmeübertrager (31) ist, der im Bereich einer Kühlanlage (6) eines Primärantriebs (3) des Straßenfertigers oder Beschickers (1) angeordnet ist.

## Claims

1. Road finishing machine or a feeder (1), having:
a tank (8) for receiving an additive (9) for the treatment of exhaust gases of the construction machine (1), the additive (9) having a decomposition temperature,
at least one connecting line (10) which is configured to conduct the additive (9) away from the tank (8) and/or to the tank (8), and
a withdrawal unit (16) which is connected to the at least one connecting line (10) and which is configured to transport the additive (9) from the tank (8) to the at least one connecting line (10) and/or from the connecting line (10) into the tank (8),
wherein the road finishing machine or feeder (1) furthermore comprises a heat management system (13) which is designed to influence the temperature of the additive (9) in the tank (8) such that it does not exceed the decomposition temperature of the additive (9), wherein the tank (8) is enclosed by an insulating housing (15) comprising channels (18) through which ambient air can flow.

2. Road finishing machine or a feeder according to claim 1, **characterized in that** the heat management system (13) is designed to influence the temperature of the additive (9) in the tank (8) such that it does not exceed 50 °C.

3. Road finishing machine or a feeder according to one of claims 1 or 2, **characterized in that** the insulating housing (15) comprises at least one first heat transfer unit (20) which is configured, together with a compressor (23), to supply thermal energy to the tank (8) and/or its contents and/or to remove thermal energy from said tank (8) and/or its contents.

4. Road finishing machine or a feeder according to one of the preceding claims, **characterized in that** the heat management system (13) comprises control lines (12) which are connected to the withdrawal unit (16) and are designed to supply the withdrawal unit (16) with a heating medium (17), the withdrawal unit (16) being designed to selectively withdraw and/or supply thermal energy from or to the contents of the tank (8) using the heating medium (17).

5. Road finishing machine or a feeder according to claim 4, **characterized in that** the heating medium (17) is a cooling medium (33) of a cooling unit (6) of a primary drive (3) of the road finishing machine or feeder (1).

6. Construction machine according to claim 4 or 5, **characterized in that** the control lines (12) are connected to a hot and/or a cold side (25, 26) of a chiller (24).

7. Road finishing machine or a feeder according to claim 6, **characterized in that** the heat management system (13) furthermore comprises a control device (27) which is designed to selectively connect the control lines (12) to the hot or the cold side (25, 26) of the chiller (24).

8. Road finishing machine or a feeder according to claim 6 or 7, **characterized in that** the chiller (24) utilizes the thermal energy of a cooling medium (33) of a primary drive (3) of the road finishing machine or feeder (1).

9. Road finishing machine or a feeder according to one of claims 6 to 8, **characterized in that** the chiller (24) is an adsorption chiller.

10. Road finishing machine or a feeder according to one of the preceding claims, **characterized in that** as a connecting line (10), at least one return line (11) is provided, the return line (11) supplying additive (9) to the tank (8), and that in the region of the return line (11), a cooling device (32) is arranged and configured to withdraw thermal energy from the additive (9) conducted through the return line (11).

11. Road finishing machine or a feeder according to claim 10, **characterized in that** the cooling device (32) is a Peltier element (30).

12. Road finishing machine or a feeder according to claim 10, **characterized in that** the cooling device (32) is a second heat transfer unit (31) which is arranged in the region of a cooling unit (6) of a primary drive (3) of the road finishing machine or feeder (1).

## Revendications

1. Finisseur de route ou alimentateur (1) comprenant :
un réservoir (8) destiné à recevoir une substance additionnelle (9) en vue du retraitement de gaz d'échappement de l'engin de travaux publics (1), la substance additionnelle (9) présentant une température de décomposition-dégradation,
au moins une conduite de raccordement (10), qui est configurée pour acheminer la substance additionnelle (9) hors du réservoir (8) et/ou vers celui-ci,
une unité de prélèvement (16), qui est reliée à ladite au moins une conduite de raccordement (10) et est conçue pour véhiculer la substance additionnelle (9) du réservoir (8) vers ladite au moins une conduite de raccordement (10) et/ou de la conduite de raccordement (10) dans le réservoir (8),
le finisseur de route ou alimentateur (1) comportant, en outre, un système de gestion de la chaleur (13), qui est conçu pour influencer la température de la substance additionnelle (9) dans le réservoir (8) de façon à ce qu'elle ne dépasse pas la température de décomposition-dégradation de la substance additionnelle (9), le réservoir (8) étant entouré d'un carter d'isolation (15), qui comporte des canaux (18) dans lesquels peut s'écouler de l'air ambiant environnant.

2. Finisseur de route ou alimentateur selon la revendication 1, **caractérisé en ce que** le système de gestion de la chaleur (13) est conçu pour influencer la température de la substance additionnelle (9) dans le réservoir (8) de manière à ce qu'elle ne dépasse pas les 50°C.

3. Finisseur de route ou alimentateur selon la revendication 1 ou la revendication 2, **caractérisé en ce que** le carter d'isolation (15) comprend au moins un premier échangeur de chaleur (20), qui, en commun avec un compresseur (23), est configuré pour amener et/ou soustraire de l'énergie calorifique au réservoir (8) et/ou à son contenu.

4. Finisseur de route ou alimentateur selon l'une des revendications précédentes, **caractérisé en ce que** le système de gestion de la chaleur (13) comprend des conduites de régulation (12), qui sont reliées à l'unité de prélèvement (16) et sont conçues pour alimenter l'unité de prélèvement (16) avec un fluide caloporteur (17), l'unité de prélèvement (16) étant conçue pour sélectivement soutirer et/ou amener de l'énergie calorifique au contenu du réservoir (8) par l'utilisation du fluide caloporteur (17).

5. Finisseur de route ou alimentateur selon la revendication 4, **caractérisé en ce que** le fluide caloporteur (17) est un fluide de refroidissement (33) d'une installation de refroidissement (6) d'un entraînement primaire (3) du finisseur de route ou alimentateur (1).

6. Finisseur de route ou alimentateur selon la revendication 4 ou la revendication 5, **caractérisé en ce que** les conduites de régulation (12) sont reliées à un côté chaud et/ou froid (25, 26) d'une machine frigorigène (24).

7. Finisseur de route ou alimentateur selon la revendication 6, **caractérisé en ce que** le système de gestion de la chaleur (13) comprend, en outre, un dispositif de régulation (27), qui est conçu pour relier les conduites de régulation (12) sélectivement au côté chaud ou froid (25, 26) de la machine frigorigène (24).

8. Finisseur de route ou alimentateur selon la revendication 6 ou la revendication 7, **caractérisé en ce que** la machine frigorigène (24) utilise l'énergie calorifique d'un fluide de refroidissement (33) d'un entraînement primaire (3) du finisseur de route ou alimentateur (1).

9. Finisseur de route ou alimentateur selon l'une des revendications 6 à 8, **caractérisé en ce que** la machine frigorigène (24) est une machine frigorigène à adsorption.

10. Finisseur de route ou alimentateur selon l'une des revendications précédentes, **caractérisé en ce que** concernant la conduite de raccordement (10), il est prévu au moins une conduite de retour (11), la conduite de retour (11) acheminant de la substance additionnelle (9) vers le réservoir (8), et dans la zone de la conduite de retour (11) est agencé un dispositif de refroidissement (32) configuré pour soutirer de l'énergie calorifique à la substance additionnelle (9) véhiculée à travers la conduite de retour (11).

11. Finisseur de route ou alimentateur selon la revendication 10, **caractérisé en ce que** le dispositif de refroidissement (32) est un élément Peltier (30).

12. Finisseur de route ou alimentateur selon la revendication 10, **caractérisé en ce que** le dispositif de refroidissement (32) est un deuxième échangeur de chaleur (31), qui est agencé dans la zone d'une installation de refroidissement (6) d'un entraînement primaire (3) du finisseur de route ou alimentateur (1).
